# EUROPEAN PATENT SPECIFICATION

(11) **EP 0 592 011 B1**
(45) Date of publication and mention of the grant of the patent: **24.02.1999**
(21) Application number: 93118075.6
(22) Date of filing: 28.09.1989
(51) Int. Cl.: H04N 7/167, H04N 7/16

(54) **IPPV programming distribution control system**
Steuersystem zur Verteilung von Vorauszahlungsprogrammen
Système de commande pour la distribution de programmes à prépaiement

(30) Priority: 07.10.1988 US 255117
(43) Date of publication of application: 13.04.1994
(62) Divisional of application: 89309908.5
(73) Proprietor: GENERAL INSTRUMENT CORPORATION, Horsham, PA 19044 (US)
(72) Inventor: Bennett, Christopher John, San Diego, California 92116 (US)
(74) Representative: Blatchford, William Michael

(56) References cited:
- EP-A- 0 161 913
- EP-A- 0 187 961
- EP-A- 0 200 310
- WO-A-85/00718
- US-A- 4 751 732

## Description

The present invention generally pertains to the distribution of scrambled impulse pay per view (IPPV) programs and is particularly directed to controlling the distribution of IPPV programs from a plurality of different IPPV programmers to a plurality of descramblers that are authorized for descrambling the IPPV programs by respectively different business data processing systems.

In a prior art premium programming distribution control system, as described in EP-A-0187961, a business control center provides access control (authorization) data pertaining to multiple individual subscribers for scrambled premium programs broadcast by a plurality of different programmers; a plurality of affiliate control computers respectively related to the plurality of different programmers provide supplementary control data for the premium programs provided by the respective programmer; and a master encoder processes the authorization data provided by the business control center to provide a master data stream containing authorization data for the individual subscribers.

In one prior art IPPV distribution control system, as described in US-A-4712238, a program mask is broadcast by the respective IPPV programmer to a plurality of descramblers along with a scrambled program; a control computer provides authorization words respectively related to the authorization status of individual descramblers; and a broadcast terminal processes the authorization words for broadcast to their respectively addressed individual descramblers. The program mask pertains to the scrambled program being broadcast and contains an IPPV status bit in a given position for indicating whether or not purchase of IPPV programming is authorized. In the authorization word, the different bit positions correspond to different TV channels or programs (tiers) and the state of such bit indicates whether or not the individual descrambler has been authorized for the tier of programming identified by such bit.

In another prior art IPPV distribution control system, as described in EP-A-0161913, a broadcaster transmits a program information frame along with each program and addresses subscriber information frames containing a plurality of tier authorization bits to individual subscribers. The program information frame contains a bit in a given position indicating whether or not the program is available on a pay per view basis. In the subscriber information frame, the position of each bit identifies a tier (category) of programs and the state of such bit indicates whether the individual subscriber has subscribed to the tier of programs identified by such bit.

According to the present invention, there is provided a distribution control system for controlling the distribution of scrambled impulse pay per view (IPPV) television programming from a plurality of different IPPV programmers to a plurality of descramblers that individually may be authorized to descramble a given IPPV program upon processing of IPPV status data for the program when said IPPV status data identifies the given IPPV program as being authorized for purchase, comprising: a business data processing system for providing authorization data for a plurality of individual descramblers; a plurality of channel control systems respectively related to a plurality of the different IPPV programmers for providing descrambler messages containing IPPV status data for individual IPPV programs; and an IPPV data management system for processing authorization data provided by the business data processing system to provide descrambler messages unique to each descrambler containing authorization data pertaining to the individual descrambler; the system being characterised by there being a plurality of the said business data processing systems with each business data processing system being adapted for providing for the individual descramblers authorization data pertaining to a plurality of different IPPV programmers for authorizing a given IPPV program for purchase only when the authorization data for the individual descrambler indicates that purchase by the individual descrambler of IPPV programs provided by the programmer providing the said given IPPV program is authorized; and by each of the individual descrambler messages provided by the IPPV data management system containing a plurality of tier authorization bits, with the position of each bit identifying a tier of IPPV programs and each bit indicating whether purchase by the individual descrambler is authorized for the tier of IPPV programs identified by such bit; and the descrambler messages provided by a plurality of channel control systems for a respective plurality of different IPPV programmers each containing a IPPV status bit in a respectively different position for processing with the tier authorization bits of the individual descrambler message with each IPPV status bit indicating whether or not purchase of IPPV programming provided by the respective IPPV programmer is authorized. The invention also includes a distribution control system for controlling the distribution of scrambled impulse pay per view (IPPV) television programming from a plurality of different IPPV programmers to a plurality of descramblers that individually may be authorized to descramble a given IPPV program upon processing of IPPV status data for the program when the IPPV status data identifies the given IPPV program as being authorized for purchase, comprising: a business data processing system for providing authorization data for a plurality of individual descramblers; a plurality of channel control systems respectively related to a plurality of the different IPPV programmers for providing descrambler messages containing IPPV status data for individual IPPV programs: and an IPPV data management system for processing authorization data provided by the business data processing system to provide descrambler messages unique to each descrambler containing authorization data pertaining to the individual descrambler; the system being characterised by there being a plurality of the said business data processing systems with each business data processing system being adapted for providing for the individual descramblers authorization data pertaining to a plurality of different IPPV programmers for authorizing a given IPPV program for purchase only when the authorization data for the individual descrambler indicates that purchase by the individual descrambler of IPPV programs provided by the programmer providing the given IPPV program is authorized; and by each of the individual descrambler messages provided by the IPPV data management system containing a plurality of tier authorization bits, with the position of each bit identifying a tier of IPPV programs and each bit indicating whether purchase by the individual descrambler is authorized for the tier of IPPV programs identified by such bit; and the descrambler messages provided by a group of the channel control systems containing an IPPV status bit in a position for processing with a common one of the tier authorization bits of the individual descrambler message with the IPPV status bit indicating whether or not purchase of IPPV programming is authorized.

Each of the business data processing systems may be operated by a separate business entity that contracts with given IPPV programmers and owners of individual descramblers to authorize the individual descramblers to descramble the IPPV programming provided by the given IPPV programmers. Preferably the system allows the view history data of a given descrambler pertaining to programs provided by one given IPPV programmer to be restricted from the business entities which do not operate the business data processor that provides authorization data pertaining to IPPV programming of the one given IPPV programmer for the individual descrambler. Accordingly, it is possible to provide centralized authorization of different individual descramblers for receiving IPPV programming provided by different IPPV programmers without making the view history data of an individual descrambler pertaining to a given IPPV programmer accessible to business entities that do not operate the business data processing system that authorizes the individual descrambler to descramble IPPV programming provided by the given IPPV programmer.

In one preferred embodiment of the present invention, the IPPV data management system sorts view history data in accordance with a scheme wherein the view history data from a given descrambler for a given IPPV programmer is reported to only one business data processing system.

In another preferred embodiment, a plurality of the said IPPV data management systems are coupled to the plurality of business data processing systems and the said plurality of channel control systems; and all data pertaining to any given descrambler is processed by a single said IPPV data management system.

In still another preferred embodiment, the system is adapted for controlling the distribution of IPPV programming to descramblers that individually may be authorized to descramble a given IPPV program upon processing of cost data for the program and credit data for the descrambler.

The invention will now be described by way of example with reference to the drawings, in which:-
Figure 1 is a block diagram of one preferred embodiment of the system of the present invention; and
Figure 2 is a block diagram of another preferred embodiment of the system of the present invention.

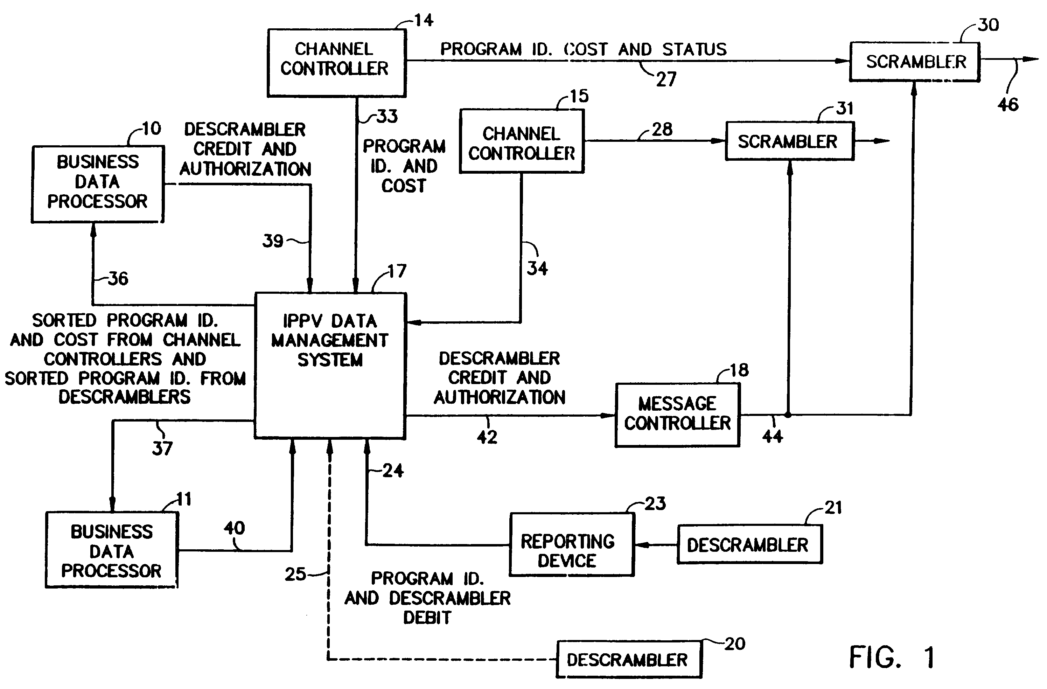

Referring to Figure 1, one preferred embodiment of the IPPV programming distribution control system of the present invention includes a plurality of business data processors 10, 11, a plurality of channel controllers 14, 15, an IPPV management system 17, and a message controller 18.

The distribution control system of Figure 1 controls the distribution of scrambled impulse pay per view (IPPV) programming from a plurality of different IPPV programmers to a plurality of descramblers 20, 21 that individually may be authorized to descramble an individual IPPV program upon processing of cost data for the program and credit data for the descrambler and upon processing of IPPV status data for the program and authorization data for the descrambler. The descramblers 20, 21 may be of the type described in the aforementioned U.S. Patent No. 4,712,238. However, an improved version that is adapted for processing a plurality of tiers of IPPV authorization data is preferred.

Each descrambler 20, 21 individually provides debit data indicating the cost of descrambled IPPV programs and view history data identifying descrambled IPPV programs. This descrambler-provided data is communicated to the IPPV data management system 17, either directly by a reporting device 23 connected to the descrambler 21 and line 24, or indirectly 25. Such indirect communication may be as described in U.S. Patent No. 4,712,238, or by use of a portable memory device into which the descrambler-provided data is stored from the descrambler 20 and from which the descrambler-provided data is retrieved and loaded into the IPPV data management system 17. The reporting device 23 may be of the type described in United States Patent Application No. 07/123,568 filed November 20, 1987 by Christopher John Bennett, the inventor of the present invention. Alternatively the reporting device 23 may of the type that responds to a polling signal transmitted to the descrambler 21.

Each of the channel controllers 14, 15 is operated by a different IPPV programming provider. An IPPV programmer may offer material on more than one channel. Each of the channels controllers 14, 15 respectively provides descrambler messages containing identification, cost and IPPV status data for individual IPPV programs. These descrambler messages are authenticated and provided over lines 27, 28 to scramblers 30, 31 that are operated by the respective IPPV programming providers. The descrambler messages provided on lines 27 and 28 are first processed by the respective controllers 14, 15 to authenticate such messages for transmission to the descramblers 20, 21. Such authentication processing is described in U.S. Patent No. 4,712,238 in the description of the processing of the cost signal and the program mask for inclusion in a channel rekey message.

The channel controllers 14, 15 also provide such IPPV program and cost identification data to the IPPV data management system 17 via lines 33, 34.

The IPPV data management system 17 sorts the IPPV program identification and cost data provided by the channel controllers 14, 15 in accordance with which business data processors 10, 11 process data for those IPPV programs provided by the respective given IPPV programmers, and sorts view history data provided by the descramblers 20, 21 in accordance with which business data processors 10, 11 process data for the respective descramblers 20, 21 for the IPPV programmers that provide the IPPV programs identified in the view history data provided by the respective descramblers 20, 21. The IPPV data management system 17 sorts the view history data in accordance with a scheme wherein the view history data from a given descrambler 20, 21 for a given IPPV programmer is reported to only one business data processor 10, 11.

The IPPV data management system 17 forwards the sorted IPPV program identification and cost data and the sorted view history data to the respective business data processors via lines 36, 37.

Each business data processor 10, 11 processes view history data and credit data for individual descramblers 20, 21 and cost data for IPPV programs provided by given IPPV programmers and provides credit data and IPPV authorization data pertaining to individual descramblers 20, 21 via lines 39, 40 to the IPPV data management system 17.

Each of the business data processors 10, 11 is operated by a separate business entity that contracts with given IPPV programmers and owners of individual descramblers 20, 21 to authorize the individual descramblers to descramble the IPPV programming provided by the given IPPV programmers. Each of the business data processors 10, 11 maintains an account balance for each individual descrambler 20, 21 for which it authorizes descrambling of IPPV programming. Credits are added to the account balance for payments and for credit advances attributed to the owner of such individual descramblers 20, 21. Debits are subtracted from the account balance for charges incurred for descrambled IPPV programming. Such debits are computed by the business data processor 10, 11 by correlating the IPPV program identification data included in the view history data received from the individual descrambler 20, 21 via the IPPV data management system 17 with the cost data for the identified IPPV program, as provided to the business data processor 10, 11 via the IPPV data management system 17 from the channel controller 14, 15 for the identified IPPV program.

For example, the business data processor 10 authorizes the descrambler 20 to descramble IPPV programming provided by the IPPV programmer that operates the channel controller 14. The business data processor 10 receives view history data indicating that the descrambler 20 has descrambled IPPV program No. 101 provided by the IPPV programmer that operates the channel controller 14. The business data processor 10 also receives data from the channel controller 14 (via the IPPV data management system 17) indicating the cost of descrambling IPPV program No. 101. With such received data, the business data processor 10 debits the account balance of the owner of descrambler 20 by the cost of descrambling IPPV program No. 101. The account balances for the respective descramblers 20, 21 that are maintained by the business data processors 10, 11 are used for billing the owners of the descramblers 20, 21.

The IPPV data management system 17 processes the credit data and IPPV authorization data provided by the business data processors 10, 11 to provide descrambler messages on line 42 that are unique to each descrambler and contain credit data and IPPV authorization data pertaining to the individual descrambler 20, 21. The IPPV data management system 17 maintains an accumulated credit balance for each individual descrambler 20, 21. Credit data received from the business data processors 10, 11 indicating a payment attributed to the owner of an individual descrambler 20, 21 causes the accumulated credit balance to be incremented in the amount of such payment. The accumulated credit is further adjusted either upward or downward in accordance with advanced credit data received from all of the business data processors 10, 11. The IPPV data management system 17 makes such adjustment in accordance with a predetermined criteria. For example, the adjustment may be made by the amount of the sum of the credit advances indicated in the credit data received from the different business data processors 10, 11; or the adjustment may be made by the amount of the lowest credit advance indicated in the credit data received from the different business data processors 10, 11.

The IPPV data management system 17 authenticates the debit data provided by the descramblers 20, 21. When the debit data is provided indirectly 25, such authentication is accomplished in the manner described in U.S. Patent No. 4,712,238. When the debit data is provided directly over line 24, such authentication is accomplished by comparing the debit data with debit data calculated by processing the descrambling program identification data in the view history with the cost data for the identified programs that is provided by the channel controllers 14, 15.

The system of the present invention is used to control the distribution of IPPV programming to descramblers 20, 21 that individually may be authorized to descramble a given IPPV program upon processing of cost data for the program and credit data for the descrambler 20, 21 only when the IPPV status data identifies the given IPPV program as being authorized for purchase and the authorization data for the descrambler indicates that purchase of IPPV programs provided by the programmer providing said given IPPV program is authorized. Each of the individual descrambler messages provided by the IPPV data management system 17 contain a plurality of tier authorization bits, with the position of each bit identifying a tier of IPPV programs and each bit indicating whether purchase by the individual descrambler 20, 21 is authorized for the tier of IPPV programs identified by such bit. In one such embodiment, the descrambler messages provided by a plurality of the channel controllers 14, 15 for a respective plurality of different IPPV programmers each contains an IPPV status bit in a respectively different position for processing with the tier authorization bits of the individual descrambler message, with each IPPV status bit indicating whether or not purchase of IPPV programming provided by the respective IPPV programmer is authorized. A business data processor 10, 11 can authorize an individual descrambler 20, 21 for any number of tiers; and a given descrambler can be authorized by any number of business data processors 10, 11 for a given tier if there is duplication of in IPPV programming packages sold by business entities operating different business data processors 10, 11.

In another embodiment, the descrambler messages provided by a group of the channel controllers 14, 15 contain an IPPV status bit in a position for processing with a common one of the tier authorization bits of the individual descrambler message, with the IPPV status bit indicating whether or not purchase of an IPPV program is authorized. This enables the IPPV programming distribution control system to accommodate a greater number of channel controllers 14, 15 than the number of tier authorization bit positions in the descrambler message provided by the IPPV data management system 17.

The descrambler messages provided on line 42 are processed by the message controller 18 to authenticate such messages for transmission to the descramblers 20, 21. Such authentication processing is described in U.S. Patent No. 4,712,238 in the description of the processing of the credit signal and the authorization word for inclusion in a category rekey message. The authenticated descrambler messages are provided on line 44 to each of the scramblers 30, 31 for the different IPPV programmers. Each scrambler 30, 31 includes the authenticated descrambler messages received on lines 27, 28 from the channel controllers and on line 44 from the message controller 18 in scrambled programming signals 46 that are transmitted to the descramblers 20, 21, as described in U.S. Patent No. 4,712,238.

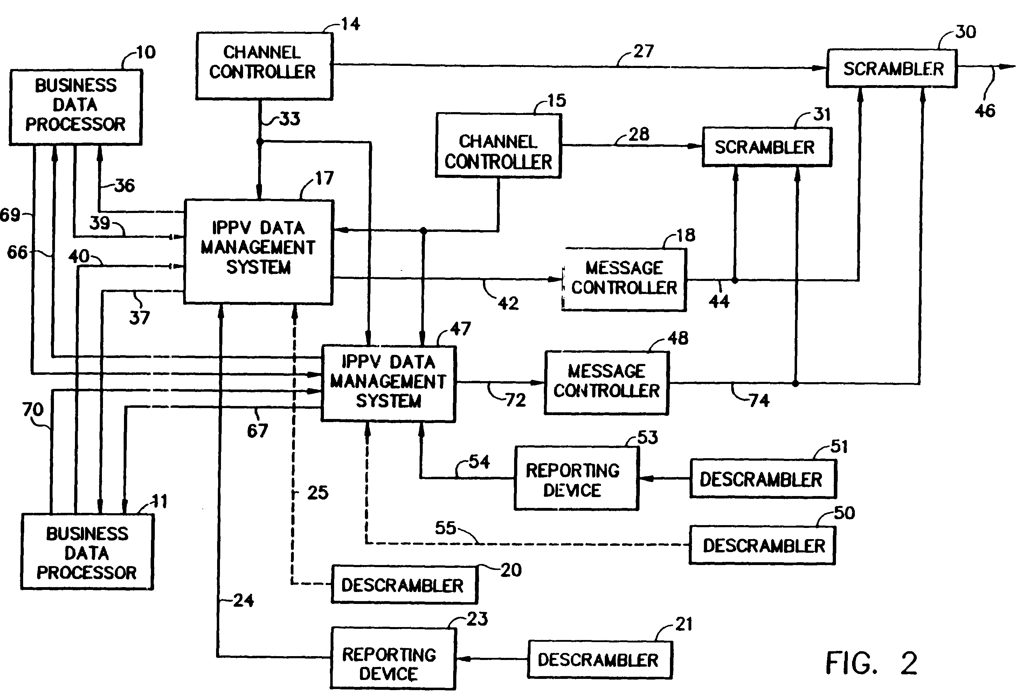

In an alternative preferred embodiment, as shown in Figure 2, a plurality of IPPV data management systems 17, 47 are coupled to the plurality of business data processors 10, 11 and the plurality of channel controllers 14, 15. This embodiment is used for controlling the distribution of IPPV programming to both the first set of descramblers 20, 21, and a second set of descramblers 50, 51. In this embodiment, all data pertaining to any given descrambler 20, 21, 50, 51 is processed by a single said IPPV data management system 17, 47. Accordingly, all data pertaining to the first set of descramblers 20, 21 is processed by one IPPV data management system 17; and all data pertaining to the second set of descramblers is processed by the other IPPV data management system 47. In this embodiment, the operation of the business data processors 10, 11, the channel controllers 14, 15, the IPPV data management system 17, the message controller 18 and the descramblers 20, 21 with respect to each other is the same as in the embodiment described with reference to Figure 1.

Each descrambler 50, 51 individually provides debit data indicating the cost of descrambled IPPV programs and view history data identifying descrambled IPPV programs. This descrambler-provided data is communicated to the IPPV data management system 47, either directly by a reporting device 53 connected to the descrambler 51 and line 54, or indirectly 55.

The channel controllers 14, 15 also provide such IPPV program and cost identification data to the IPPV data management system 47 via lines 33, 34.

The IPPV data management system 47 sorts the IPPV program identification and cost data provided by the channel controllers 14, 15 in accordance with which business data processors 10, 11 process data for those IPPV programs provided by the respective given IPPV programmers, and sorts view history data provided by the descramblers 50. 51 in accordance with which business data processors 10, 11 process data for the respective descramblers 50, 51 for the IPPV programmers that provide the IPPV programs identified in the view history data provided by the respective descramblers 50, 51. The IPPV data management system 47 sorts the view history data in accordance with a scheme wherein the view history data from a given descrambler 50, 51 for a given IPPV programmer is reported to only one business data processor 10, 11.

The IPPV data management system 47 forwards the sorted IPPV program identification and cost data and the sorted view history data to the respective business data processors via lines 66, 67.

Each business data processor 10, 11 processes view history data and credit data for individual descramblers 50, 51 and cost data for IPPV programs provided by given IPPV programmers and provides credit data and IPPV authorization data pertaining to individual descramblers 50, 51 via lines 69, 70 to the IPPV data management system 47.

Each of the business data processors 10, 11 maintains an account balance for each individual descrambler 50, 51 for which it authorizes descrambling of IPPV programming in the same manner as the account balances are maintained for the individual descramblers 20, 21.

The IPPV data management system 47 processes the credit data and IPPV authorization data provided by the business data processors 10, 11 to provide descrambler messages on line 72 that are unique to each descrambler and contain credit data and IPPV authorization data pertaining to the individual descrambler 50, 51. The IPPV data management system 47 maintains an accumulated credit balance for each individual descrambler 50, 51 in the same manner as the IPPV data management system 17 maintains accumulated credit balances for the individual descramblers 20, 21.

The IPPV data management system 47 authenticates the debit data provided by the descramblers 50, 51 in the same manner as the IPPV data management system 17 authenticates the debit data provided by the descramblers 20, 21.

The IPPV data management systems 17, 47 also generates polling messages to be sent to the descramblers 20, 21, 50, 51. The polling messages are provided to the scramblers 30, 31 by the respective message controllers 42, 72.

The business data processors 10, 11 perform the subscriber account management functions for the IPPV programmers. Unlike subscription programming, where a consumer may be authorized from several business systems simultaneously, an IPPV programmer should authorize a given consumer through only a single business data processor 10, 11. Otherwise the view history data for a given individual descrambler pertaining to that IPPV programmer would have to be uploaded to several business data processors 10, 11, which would cause multiple bills to be generated. An IPPV programmer may authorize descramblers through more than one business data processor 10, 11 (e.g. one for East coast subscribers and one for West coast subscribers). However, it is preferred that IPPV authorization for any given programmer is only available through one business data processor 10, 11. The complication introduced is one of correctly managing deauthorization by determining which business data processor 10, 11 receives the view history data if there is more than one business data processor authorizing a given IPPV programming descrambling service by the individual descrambler, and, for whatever reason, the subscriber is not known to be authorized for the service.

Although several business data processors 10, 11 can be associated with a given IPPV programmer, and it is only necessary to ensure that at most one business data processor 10, 11 offers a given IPPV programming service to any individual descrambler.

Any IPPV program can be offered for sale by at most one IPPV provider. If a program was offered by two providers simultaneously on the same channel, and a consumer subscribing to both of them bought that program, there is no way to tell which programmer should be paid. Thus, any purchasable program has only one IPPV tier associated with it. Normally, this tier is the only IPPV authorization tier used on that particular channel. This is not a necessary assumption. In systems where a business entity is providing IPPV programs from more than one IPPV programmer, there would be more than one IPPV authorization tier used on the channel. If the view history does not identify the authorization tier, it is necessary for the IPPV data management system 17, 47 to be given a log by the channel controllers 14, 15 showing which IPPV programmer supplied a given IPPV program to a given business data processor 10, 11, so that it can disburse view history data only to the business data processor(s) 10, 11 that are operated by business entities that are authorized to act for that IPPV programmer.

The IPPV data management system 17, 47 maintains a table showing which business data processors 10, 11 are associated with a given IPPV programmer, and this table is used to determine which business data processor 10, 11 receives a given view history record.

Each channel controller 14, 15 maintains a record of which IPPV authorization tier is related to the channel controller 14, 15 and a database of past IPPV programs.

The channel rekey messages generated on lines 27, 28 by the channel controllers 14, 15 set the IPPV tier which is authorized for the respective channel. On subscription programs, this announces to the VC2-prime descrambler which IPPV tier is supported on the channel. On IPPV programs, this defines the IPPV access rights. Access control via the IPPV tiers is enabled by use of the IPPV bit in the program rekey message.

Each channel controller 14, 15 generates file of past IPPV programs. These files are required by the business data processors 10, 11 for determination of debit, generation of itemized bills, and validation of incoming view history. Each such file should cover a certain period of time, ideally a month, but more realistically probably a week. Each file should identify the IPPV programmer and the file's position within the sequence of files generated by the channel controller so that the business data processor 10, 11 can be sure it has all the program history data in sequence.

Each program record in the file should contain the program ID, the program name, the program cost, and the program's IPPV authorization tier byte Program records should be in chronological order of transmission, with the oldest program first. A program covered by a free preview epoch and a purchase epoch is regarded as a single program and should be recorded only once. They can be written to the program history database at any time after the program starts.

Enabling and disabling of IPPV capabilities is done solely by the IPPV data management system 17, 47 through a new transaction. Authorization tier changes are to have immediate effect, and therefore always cause regeneration of any and all stored category rekey messages, and cause the category rekey message to be placed in the high priority queue. The new values are propagated until they are changed or until the unit is removed from the message lists.

Setting of IPPV credit is done solely by the IPPV data management system 17, 47 through a new transaction. Credit changes are to have immediate effect, and therefore cause regeneration of any and all stored category rekey messages and cause a category rekey message to be placed in the high priority queue. The new value is propagated until it is changed or until the unit is removed from the message lists.

The IPPV data management system 17, 47 maintains a descrambler unit database that contains data required to support descrambler unit features and capabilities within the scope of the overall IPPV data management system functionality. Creation of new unit records occur as a result of authorization transactions from either the business data processors or the console for the IPPV data management system 17, 47.

The IPPV data management system 17, 47 supports removal of a business data processor 10, 11 from the IPPV data management system 17, 47. For each descrambler, all services that previously were authorized by the business data processor 10,11 being removed are deauthorized and their view histories are collected. Once all descramblers have been deauthorized for IPPV programming services authorized by the removed business data processor 10, 11, and their view histories have been collected and stored on an upload tape, the IPPV data management system 17, 47 removes the record of the removed business data processor 10, 11 from its database.

The IPPV data management system 17, 47 also supports removal of a specified IPPV programming service for a given business data processor 10, 11. In this case, the descrambler units are deauthorized for only the removed service.

It is also possible to place a specific service for a business data processor 10, 11 in a "frozen" state. All transactions requesting authorization of a service in this state for a business data processor 10, 11 shall be rejected. However, deauthorization transactions are supported and view history data is collected.

Hence, for a business data processor, each IPPV programming service may have one of four states: not authorized, authorized, frozen, and terminated.

Termination of services is entered as a request to the IPPV data management system 17, 47. Upon receiving this request, the IPPV data management system 17, 47 initiates a background task to traverse the descrambler unit database, deauthorizing all units authorized for the service corresponding to the service symbol and collecting their view history. Once all descrambler units have been deauthorized for the terminated service and their view histories collected, the IPPV data management system 17, 47 removes the service from the list of current services. While the IPPV data management system 17, 47 is in the process of terminating a service, the service is designated in a "terminated" state, and the IPPV data management system 17, 47 prohibits any new authorization actions involving the service.

The IPPV data management system 17, 47 supports authorization and deauthorization of descrambler units for IPPV programming services. Authorization and deauthorization of services are specified in terms of the applicable service symbols. Authorization or deauthorization of services by the IPPV data management system 17, 47 is immediate. Alternatively it could be possible to request authorization or deauthorization of a service to take effect for some future date.

Authorization and deauthorization of a descrambler unit is possible from any business data processor 10, 11 or from the console of the IPPV data management system 17, 47. When by a business data processor 10, 11, the authorization/deauthorization request is checked by the IPPV data management system 17, 47 to allow only transactions for services that the requesting business data processor 10, 11 is authorized for. An authorization or deauthorization request from a business data processor 10, 11 may apply to specified individual IPPV programming services or to all of services authorized by the business data processor.

For descrambler unit authorization, the IPPV data management system 17, 47 builds a composite authorization mask by ORing the current authorization mask with the new authorization mask corresponding to specified service symbol. The resulting composite authorization mask is transmitted by the IPPV data management system 17, 47 to the respective message controller 18, 48.

For descrambler unit deauthorization, the IPPV data management system 17, 47 removes from the current authorization mask those tier bit(s) corresponding to the service(s) which are being deauthorized. The authorization mask resulting from a deauthorization action is transmitted by the IPPV data management system 17, 47 to the respective message controller 18, 48.

The IPPV data management system 17, 47 maintains at least the following basic authorization information about each descrambler: (1) a list of IPPV programming services the descrambler is authorized to descramble; and (b) the date on which the descrambler was last authorized for each service.

The IPPV data management system 17, 47 maintains at least the following basic credit information about each descrambler: (a) a show count limit set by each business data processor 10, 11; (b) the credit advance limit set by each business data processor 10, 11 and (c) the dates the showcount limit and the credit advance limit were last updated.

When descramblers are first authorized for an IPPV service, the IPPV data management system 17, 47 sends a polling message to the descramblers 21, 51 connected to reporting devices 23 53, requiring the reporting devices 23, 53 to report, thereby confirming that the reporting path is alive. The reporting device is required to report any change of view history or debit authenticator, but only when polled.

The IPPV data management system 17, 47 stores the view history data in a database organized by descrambler address, showing, for each view history record: (a) the channel identifier (IPPV provider ID); (b) the IPPV program ID; (c) the associated showcount; (d) whether the view history has been uploaded to a business data processor 10, 11; and (e) the date and time the view history record was received. The IPPV data management system 17, 47 checks the showcount data for consistency, and generates an exception report when an inconsistency is found.

If view history data is received from an unknown descrambler unit, a new unit record is created for it, and an exception report is generated. The view history is included in any view history upload tapes created for the business data processor responsible for the services identified in such view history.

The business data processors 10, 11 can access all view history data for IPPV programming services respectively authorized by such business data processors 10, 11.

## Claims

1. A distribution control system for controlling the distribution of scrambled impulse pay per view (IPPV) television programming from a plurality of different IPPV programmers to a plurality of descramblers (20, 21. 50. 51) that individually may be authorized to descramble a given IPPV program upon processing of IPPV status data for the program when said IPPV status data identifies the given IPPV program as being authorized for purchase, comprising:
a business data processing system (10, 11) for providing authorization data (39, 40) for a plurality of individual descramblers (20, 21, 50, 51);
a plurality of channel control systems (14, 15) respectively related to a plurality of the different IPPV programmers for providing descrambler messages (27, 28) containing IPPV status data for individual IPPV programs; and
an IPPV data management system (17, 47) for processing authorization data (39, 40) provided by the business data processing system (10, 11) to provide descrambler messages (42, 72) unique to each descrambler (20, 21, 50, 51) containing authorization data pertaining to the individual descrambler;
the system being characterised by there being a plurality of the said business data processing systems (10, 11), with each business data processing system (10, 11) being adapted for providing for the individual descramblers (20, 21, 50, 51) authorization data (39, 40) pertaining to a plurality of different IPPV programmers for authorizing a given IPPV program for purchase only when the authorization data (39, 40) for the individual descrambler (20, 21, 50, 51) indicates that purchase by the individual descrambler (20, 21, 50, 51) of IPPV programs provided by the programmer providing the said given IPPV program is authorized; and by
each of the individual descrambler messages (42, 72) provided by the IPPV data management system (17, 47) containing a plurality of tier authorization bits, with the position of each bit identifying a tier of IPPV programs and each bit indicating whether purchase by the individual descrambler (20, 21, 50, 51) is authorized for the tier of IPPV programs identified by such bit; and
the descrambler messages (27, 28) provided by a plurality of channel control systems (14, 15) for a respective plurality of different IPPV programmers each containing a IPPV status bit in a respectively different position for processing with the tier authorization bits of the individual descrambler message (42, 72), with each IPPV status bit indicating whether or not purchase of IPPV programming provided by the respective IPPV programmer is authorized.

2. A distribution control system for controlling the distribution of scrambled impulse pay per view (IPPV) television programming from a plurality of different IPPV programmers to a plurality of descramblers (20, 21, 50, 51) that individually may be authorized to descramble a given IPPV program upon processing of IPPV status data for the program when the IPPV status data identifies the given IPPV program as being authorized for purchase, comprising:
a business data processing system (10, 11) for providing authorization data (39, 40) for a plurality of individual descramblers (20, 21, 50, 51);
a plurality of channel control systems (14, 15) respectively related to a plurality of the different IPPV programmers for providing descrambler messages (27, 28) containing IPPV status data for individual IPPV programs; and
an IPPV data management system (17, 47) for processing authorization data (39, 40) provided by the business data processing system (10, 11) to provide descrambler messages (42, 72) unique to each descrambler (20, 21, 50, 51) containing authorization data pertaining to the individual descrambler;
the system being characterised by there being a plurality of the said business data processing systems (10, 11), with each business data processing system (10, 11) being adapted for providing for the individual descramblers (20, 21, 50, 51) authorization data (39, 40) pertaining to a plurality of different IPPV programmers for authorizing a given IPPV program for purchase only when the authorization data (39, 40) for the individual descrambler (20, 21, 50, 51) indicates that purchase by the individual descrambler (20, 21, 50, 51) of IPPV programs provided by the programmer providing the given IPPV program is authorized; and by
each of the individual descrambler messages (42, 72) provided by the IPPV data management system (17, 47) containing a plurality of tier authorization bits, with the position of each bit identifying a tier of IPPV programs and each bit indicating whether purchase by the individual descrambler (20, 21, 50, 51) is authorized for the tier of IPPV programs identified by such bit; and
the descrambler messages (27, 28) provided by a group of the channel control systems (14, 15) containing an IPPV status bit in a position for processing with a common one of the tier authorization bits of the individual descrambler message (42, 72), with the IPPV status bit indicating whether or not purchase of IPPV programming is authorized.

3. A distribution control system according to claim 1 or claim 2, characterised by comprising a plurality of the said IPPV data management systems, (17, 47) coupled to the said business data processing systems (10, 11),
wherein all data (39, 40) pertaining to any given descrambler (20, 21, 50, 51) are processed by a single said IPPV data management system (17, 47).

## Patentansprüche

1. Verteilungssteuerungssystem zum Steuern der Verteilung verschlüsselter Impuls-pay-per-view (IPPV) Fernsehprogramme von einer Mehrzahl verschiedener IPPV-Programmanbieter auf eine Mehrzahl von Entscramblern (20, 21, 50, 51), die individuell befugt werden können, ein gegebenes IPPV-Programm nach Verarbeitung von IPPV-Zustandsdaten für das Programm zu entschlüsseln, wenn die genannten IPPV-Zustandsdaten das gegebene IPPV-Programm als zum Kauf berechtigt identifizieren, mit:
einem Geschäftsdatenverarbeitungssystem (10, 11), um für eine Mehrzahl einzelner Entscrambler (20, 21, 50, 51) Berechtigungsdaten (39, 40) zur Verfügung zu stellen;
einer Mehrzahl von Kanalsteuersystemen (14, 15), die jeweils mit einer Mehrzahl der verschiedenen IPPV-Programmanbieter in Beziehung stehen, um Entscramblermitteilungen (27, 28) zur Verfügung zu stellen, die IPPV-Zustandsdaten für individuelle IPPV-Programme enthalten, und
einem IPPV-Datenmanagementsystem (17, 47), um Berechtigungsdaten (39, 40), die durch das Geschäftsdatenverarbeitungssystem (10, 11) zur Verfügung gestellt werden, zu verarbeiten, um Entscramblermitteilungen (42, 72) zu liefern, die, für jeden Entscrambler (20, 21, 50, 51) eigentümlich, Berechtigungsdaten enthalten, die zu dem einzelnen Entscrambler gehören;
wobei das System dadurch gekennzeichnet ist, daß eine Mehrzahl der genannten Geschäftsdatenverarbeitungssysteme (10, 11) vorhanden ist, wobei jedes Geschäftsdatenverarbeitungssystem (10, 11) dazu eingerichtet ist, um für die einzelnen Entsrcambler (20, 21, 50, 51) Berechtigungsdaten (39, 40) zu liefern, die zu einer Mehrzahl verschiedener IPPV-Programmanbieter gehören, um ein gegebenes IPPV-Programm zum Kauf lediglich dann zu berechtigen, wenn die Berechtigungsdaten (39, 40) für den einzelnen Entscrambler (20, 21, 50, 51) anzeigen, daß der Kauf von IPPV-Programmen, die von dem Programmanbieter zur Verfügung gestellt werden, der das gegebene IPPV-Programm liefert, durch den einzelnen Entscrambler (20, 21, 50, 51) berechtigt ist, und dadurch, daß
jede der einzelnen Entscramblermitteilungen (42, 72), die durch das IPPV-Datenmanagementsystem (17, 47) geliefert werden, eine Mehrzahl von Programmkategorie-Berechtigungsbits enthält, wobei die Position jedes Bit eine Kategorie von IPPV-Programmen identifiziert und jedes Bit angibt, ob der Kauf durch den einzelnen Entscrambler (20, 21, 50, 51) für die Kategorie der IPPV-Programme, die durch dieses Bit identifiziert ist, berechtigt ist, und
daß die Entscramblermitteilungen (27, 28), die durch eine Mehrzahl von Kanalsteuersystemen (14, 15) für eine entsprechende Mehrzahl verschiedener IPPV-Programmanbieter geliefert werden, jeweils ein IPPV-Zustandsbit in einer jeweils unterschiedlichen Position enthalten, die für die Verarbeitung mit den Kategorie-Berechtigungsbits der individuellen Entscramblermitteilung (42, 72) vorgesehen sind, wobei jedes IPPV-Zustandsbit angibt, ob der Kauf des IPPV-Programmes, das durch den entsprechenden IPPV-Programmanbieter geliefert wird, berechtigt ist oder nicht.

2. Verteilungssteuerungssystem zum Steuern der Verteilung verschlüsselter Impuls-pay per view (IPPV) Fernsehprogramme von einer Mehrzahl verschiedener IPPV-Programmanbieter auf eine Mehrzahl von Entscramblern (20, 21, 50, 51), die individuell befugt werden können, ein gegebenes IPPV-Programm nach Verarbeitung von IPPV-Zustandsdaten für das Programm zu entschlüsseln, wenn die IPPV-Zustandsdaten das gegebene IPPV-Programm als zum Kauf berechtigt identifizieren, mit:
einem Geschäftsdatenverarbeitungssystem (10, 11), um für eine Mehrzahl einzelner Entscrambler (20, 21, 50, 51) Berechtigungsdaten (39, 40) zu liefern;
einer Mehrzahl von Kanalsteuersystemen (14, 15), die jeweils mit einer Mehrzahl der verschiedenen IPPV-Programmanbieter in Beziehung stehen, um Entscramblermitteilungen (27, 28) zur Verfügung zu stellen, die IPPV-Zustandsdaten für individuelle IPPV-Programme enthalten, und
einem IPPV-Datenmanagementsystem (17, 47), um Berechtigungsdaten (39, 40), die durch das Geschäftsdatenverarbeitungssystem (10, 11) geliefert werden, zu verarbeiten, um Entscramblermitteilungen (42, 72) zu liefern, die, für jeden Entscrambler (20, 21, 50, 51) eigentümlich, Berechtigungsdaten enthalten, die zu dem einzelnen Entscrambler gehören;
wobei das System dadurch gekennzeichnet ist, daß eine Mehrzahl der genannten Geschäftsdatenverarbeitungssysteme (10, 11) vorhanden ist, wobei jedes Geschäftsdatenverarbeitungssystem (10, 11) dazu eingerichtet ist, um für die einzelnen Entscrambler (20, 21, 50, 51) Berechtigungsdaten (39, 40) zu liefern, die zu einer Mehrzahl verschiedener IPPV-Programmanbieter gehören, um ein gegebenes IPPV-Programm für den Kauf lediglich dann zu berechtigen, wenn die Berechtigungsdaten (39, 40) für den einzelnen Entscrambler (20, 21, 50, 51) anzeigen, daß der Kauf von IPPV-Programmen, die von dem Programmanbieter zur Verfügung gestellt werden, der das gegebene IPPV-Programm liefert, durch den einzelnen Entscrambler (20, 21, 50, 51) berechtigt ist, und dadurch, daß
jede der einzelnen Entscramblermitteilungen (42, 72), die durch das IPPV-Datenmanagementsystem (17, 47) geliefert werden, eine Mehrzahl von Programmkategorie-Berechtigungsbits enthält, wobei die Position jedes Bit eine Kategorie von IPPV-Programmen identifiziert und jedes Bit anzeigt, ob der Kauf durch den einzelnen Entscrambler (20, 21, 50, 51) für die Kategorie von IPPV-Programmen, die durch dieses Bit identifiziert ist, berechtigt ist, und
daß die Entscramblermitteilungen (27, 28), die durch eine Gruppe von Kanalsteuersystemen (14, 15) geliefert werden, die in einer Stelle ein IPPV-Zustandsbit enthalten, das zur Verarbeitung mit einem gemeinsamen Bit der Kategorie-Berechtigungsbits der individuellen Entscramblermitteilung (42, 72) vorgesehen ist, wobei das IPPV-Zustandsbit anzeigt, ob der Kauf eines IPPV-Programmes berechtigt ist oder nicht.

3. Verteilungssteuerungssystem nach Anspruch 1 oder 2, dadurch gekennzeichnet, daß es eine Mehrzahl der genannten IPPV-Datenmanagementsysteme (17, 47) aufweist, die mit den genannten Geschäftsdatenverarbeitungssystemen (10, 11) gekoppelt sind,
wobei sämtliche Daten (39, 40), die zu einem gegebenen Entscrambler (20, 21, 50, 51) gehören, durch ein einzelnes genanntes IPPV-Datenmanagementsystem (17, 47) verarbeitet werden.

## Revendications

1. Système de commande de distribution pour commander la distribution de programmes de télévision brouillés à prépaiement (IPPV) depuis une pluralité de différents dispositifs de programmation IPPV à une pluralité de décodeurs (20,21,50,51), qui peuvent être autorisés individuellement à décoder un programme IPPV donné lors du traitement de données d'état IPPV pour le programme lorsque lesdites données d'état IPPV identifient le programme IPPV donné comme étant autorisé pour l'achat, comprenant :
un système (10,11) de traitement de données de travail pour délivrer des données d'autorisation (39,40) pour une pluralité de décodeurs individuels (20,21,50,51);
une pluralité de systèmes de canaux de commande (14,15) associés respectivement à une pluralité des différents dispositifs de programmation IPPV pour délivrer des messages (27,28) du décodeur, contenant des données d'état IPPV pour des programmes IPPV individuels; et
un système (17,47) pour traiter des données d'autorisation (39,40) délivrées par le système (10,11) de traitement de données de travail pour délivrer des messages (42,72) uniques pour chaque décodeur (20,21,50,51) contenant des données d'autorisation associées au décodeur individuel,
le système étant caractérisé en ce qu'il existe une pluralité desdits systèmes de traitement de données de travail (10,11), chaque système (10,11) de traitement de données de travail étant adapté pour envoyer aux décodeurs individuels (20,21,50,51), des données d'autorisation (39,40) associées à une pluralité de différents dispositifs de programmation IPPV pour autoriser un programme IPPV donné pour l'achat uniquement lorsque les données d'autorisation (39,40) pour le décodeur individuel (20,21,50,51) indiquent que l'achat, par le décodeur individuel (20,21,50,51), de programmes IPPV fournis par le dispositif de programmation délivrant ledit programme IPPV donné, est autorisé; et
par le fait que chacun des messages (42, 72) du décodeur individuel délivrés par le système (17,47) de gestion des données IPPV contient une pluralité de bits d'autorisation de rang, la position de chaque bit identifiant un rang de programme IPPV et chaque bit indiquant si l'achat par le décodeur individuel (20,21,50,51) est autorisé pour le rang de programmes IPPV identifié par un tel bit; et
des messages (27,28) de décodeurs délivrés par une pluralité de systèmes (14,15) de commande de canaux pour une pluralité respective de dispositifs de programmation IPPV différents contenant chacun un bit d'état IPPV dans une position respectivement différente pour le traitement avec les bits d'autorisation de rang du message (42,72) du décodeur individuel, chaque bit d'état IPPV indiquant si un achat d'une programmation IPPV délivré par le dispositif de programmation IPPV respectif est autorisé ou non.

2. Système de commande de distribution pour commander la distribution de programmes de télévision brouillés à prépaiement (IPPV) à partir d'une pluralité de différents dispositifs de programmation IPPV à une pluralité de décodeurs (20,21,50,51), qui peuvent être autorisés individuellement décoder un programme IPPV donné lors du traitement de données d'état IPPV pour le programme lorsque les données d'état IPPV identifient le programme IPPV donné comme étant autorisé pour l'achat, comprenant :
un système (10,11) de traitement de données de travail pour délivrer des données d'autorisation (39,40) pour une pluralité de décodeurs individuels (20,21,50,51);
une pluralité de systèmes de canaux de commande (14,15) associés respectivement à une pluralité des différents dispositifs de programmation IPPV pour délivrer des messages (27,28) du décodeur, contenant des données d'état IPPV pour des programmes IPPV individuels; et
un système (17,47) pour traiter des données d'autorisation (39,40) délivrées par le système (10,11) de traitement de données de travail pour délivrer des messages (42,72) uniques pour chaque décodeur (20,21,50,51) contenant des données d'autorisation associées au décodeur individuel;
le système étant caractérisé en ce qu'il existe une pluralité desdits systèmes de traitement de données de travail (10,11), chaque système (10,11) de traitement de données de travail étant adapté pour envoyer aux décodeurs individuels (20,21,50,51) des données d'autorisation (39,40) associées à une pluralité de différents dispositifs de programmation IPPV pour autoriser un programme IPPV donné pour l'achat uniquement lorsque les données d'autorisation (39,40) pour le décodeur individuel (20,21,50,51) indiquent que l'achat, par le décodeur individuel (20,21,50,51), de programmes IPPV fournis par le dispositif de programmation délivrant le programme IPPV donné, est autorisé; et
par le fait que chacun des messages (42,72) du décodeur individuel délivrés par le système (17,47) de gestion des données IPPV contient une pluralité de bits d'autorisation de rang, la position de chaque bit identifiant un rang de programme IPPV et chaque bit indiquant si l'achat par le décodeur individuel (20,21,50,51) est autorisé pour le rang de programmes IPPV identifié par un tel bit; et
les messages (27,28) de décodeurs fournis par un groupe de systèmes (14,15) de commande de canaux contenant un bit d'état IPPV dans une position pour le traitement avec l'un commun des bits d'autorisation de rang du message (42,72) du décodeur individuel, avec le bit d'état IPPV indiquant si l'achat de programmes IPPV est autorisé ou non.

3. Système de commande de distribution selon la revendication 1 ou la revendication 2, caractérisé en ce qu'il comporte une pluralité de systèmes (17,47) de gestion de données IPPV, couplés auxdits systèmes (10,11) de traitement de données de travail,
dans lequel toutes les données (39,40) associées à n'importe quel décodeur donné (20,21,50,51) sont traitées par un seul système (17,47) de gestion de données IPPV.
